# EUROPEAN PATENT APPLICATION

(11) **EP 4 641 662 A1**
(43) Date of publication of application: **29.10.2025**
(21) Application number: 23905169.1
(22) Date of filing: 14.06.2023
(51) Int. Cl.: H01M 4/36, H01M 4/38, H01M 4/583, H01M 4/14, H01M 10/0525

(54) **HIGH-INITIAL-EFFICIENCY NEGATIVE ELECTRODE MATERIAL FOR LITHIUM-ION SECONDARY BATTERY AND PREPARATION METHOD THEREFOR**

(30) Priority: 19.12.2022 CN 202211633601
(71) Applicant: Tianmulake Excellent Anode Materials Co, Ltd., Liyang, Jiangsu 213330 (CN)
(72) Inventor: YIN, Yingying, Liyang, Jiangsu 213300 (CN); LIU, Bonan, Liyang, Jiangsu 213300 (CN); LUO, Fei, Liyang, Jiangsu 213300 (CN)
(74) Representative: Glück Kritzenberger Patentanwälte PartGmbB
(86) International application number: PCT/CN2023/100108
(87) International publication number: WO 2024/130982

(57) **Abstract**

Disclosed in the present invention are a high-initial efficiency negative electrode material for lithium-ion secondary batteries and a preparation method therefor. The high-initial efficiency negative electrode material comprises a porous carbon matrix, metal lithium particles, nanosilicon particles, and a carbon shell;the porous carbon matrix is a porous carbon microspheres containing through holes, and an average hole size of the through holes is 1nm-50 nm; the metal lithium particles are formed by depositing gaseous lithium in the through holes, and the nanosilicon particles are formed by depositing silicon-containing gas in the through holes; the mass of the metal lithium particles accounts for 10%-50% of the total mass of the high-initial efficiency negative electrode material; and the particle size of the nanosilicon particles is between 0.1 and45 nm, and the mass of the nanosilicon particles accounts for 20%-70% of the total mass of the high-initial efficiency negative electrode material. The use of the high-initial efficiency negative electrode material in lithium-ion secondary batteries can improve initial-cycle Coulombic efficiency, and the initial-cycle Coulombic efficiency is between 99% and 105%.

## Description

### CROSS-REFERENCE TO RELATED APPLICATION

This application claims priority for Chinese patent application No. 202211633601.7, entitled "HIGH-INITIAL EFFICIENCY NEGATIVE ELECTRODE MATERIAL FOR LITHIUM-ION SECONDARY BATTERIES AND PREPARATION METHOD THEREOF", filed with China National Intellectual Property Administration on December 19, 2022.

### BACKGROUND OF THE INVENTION

### 1. Technical Field

The present invention relates to the technical field of lithium battery materials, in particular to a high-initial efficiency negative electrodenegative electrode material for lithium-ion secondary batteries and a preparation method thereof.

### 2. Description of Related Art

With a theoretical specific capacity of 4200 mAh/g, silicon can store more lithium ions than graphite anodes, resulting in a relatively higher energy density of batteries and effectively improving endurance time and mileage. Due to its high theoretical capacity, low lithium deintercalation potential, environmental friendliness, and abundant reserves, silicon is regarded as the most promising next-generation lithium battery negative electrode material.

The alloying reaction between lithium ions and silicon results in significant volume expansion, generating considerable shear and compressive stresses that cause material particles to fracture, obstructing the direct transport of electrons in the material particles. As the number of charge and discharge cycles increases, the impact of volume expansion intensifies, leading to severe material particle fracture or even pulverization, which causes some materials to completely lose their electrochemical activity, thus reducing battery capacity and cycle performance. Furthermore, during the initial charging process of lithium-ion batteries, a solid electrolyte interphase (SEI) membrane is formed on the surface of the negative electrode, consuming some lithium ions and creating irreversible capacity, resulting in low Coulombic efficiency.

Nanosizing silicon can partially mitigate the issue of volume expansion. However, there are still challenges in uniformly dispersing silicon in carbon materials. The low Coulombic efficiency caused by lithiumion consumption can be improved through lithium supplementation. Existing lithium supplementation methods generally include lithium foil supplementation, lithium powder supplementation, electrochemical lithium supplementation, and positive electrode supplementation, but these methods are cumbersome and have limited effectiveness.

### BRIEF SUMMARY OF THE INVENTION

Embodiments of the present invention provide a high-initial efficiency negative electrode material for lithium-ion secondary batteries and a preparation method thereof. By depositing gaseous lithium and a silicon-containing gas alternately in through holes of porous carbon microspheres, metal lithium particles and nanosilicon particles are formed. On one hand, the resulting nanoscale silicon particles, with a particle size of less than 45 nm, effectively reduce the volume expansion effect. At the same time, the alternating deposition of nanosilicon and metal lithium allows for uniform distribution in the porous carbon microspheres, preventing the agglomeration of nanosilicon. On the other hand, the alternating co-deposition of metal lithium and silicon in the porous carbon microspheres can avoid the formation of lithium dendrites due to uneven distribution, while maximizing the lithium supplementation effect, thereby improving the initial Coulombic efficiency of the negative electrode material.

A lithium supplementation method for the negative electrode material provided in the embodiment of the present invention is simple and easy to operate, allowing for application in largescale production. This facilitates the uniform distribution of metal lithium particles in the nanosilicon particles, thereby avoiding the formation of lithium dendrites.

In a first aspect, an embodiment of the present invention provides a high-initial efficiency negative electrode material for lithium-ion secondary batteries, comprising a porous carbon matrix, metal lithium particles, nanosilicon particles, and a carbon shell;
wherein the porous carbon matrix is porous carbon microspheres with through holes, and an average hole size of the through holes is 1nm-50 nm;
the metal lithium particles are formed by depositing gaseous lithium in the through holes, and the nanosilicon particles are formed by depositing a silicon-containing gas in the through holes;
a mass of the metal lithium particles accounts for10%-50% of a total mass of the high-initial efficiency negative electrode material;
a particle size of the nanosilicon particles is 0.1nm-45 nm, and a mass of the nanosilicon particles accounts for 20%-70% of the total mass of the high-initial efficiency negative electrode material; and
the application of the high-initial efficiency negative electrode material in lithium-ion secondary batteries results in a initial -cycle Coulombic efficiency of 99%-105%.

Preferably, a mass of the carbon shell accounts for 1%-20% of the total mass of the high-initial efficiency negative electrode material; and
a particle size of the high-initial efficiency negative electrode material is 1µm-100 µm.

In a second aspect, an embodiment of the present invention provides a preparation method of the high-initial efficiency negative electrode material for lithium-ion secondary batteries as described in the first aspect, which is a vapor deposition method, comprising:
S1, placing porous carbon microspheres with through holes into a deposition chamber of a deposition device under an argon atmosphere, placing metal lithium in a second furnace chamber of the deposition device and evaporating the metal lithium at high temperature into gaseous lithium, and transporting the gaseous lithium from the second furnace chamber into the deposition chamber through a carrier gas, allowing the gaseous lithium to deposit in hole structure the through holes of the porous carbon microspheres to form metal lithium particles;
S2, introducing a silicon-containing gas into the deposition chamber, to deposit in the hole structure of the through holes of the porous carbon microspheres to form nanosilicon particles;
S3, alternately repeating S1 and S2, and intermittently introducing the gaseous lithium and the silicon-containing gas, resulting in uniform deposition of the metal lithium particles and the nanosilicon particles in the through holes of the porous carbon microspheres, ultimately yielding a precursor material; and
S4, performing carbon coating on the precursor material using a gas-phase method, forming a dense carbon shell on an outer surface of the porous carbon microspheres, thus obtaining the high-initial efficiency negative electrode material.

Preferably, the deposition device comprises any one of a vapor deposition furnace, a tube furnace, a rotary furnace, a bell jar furnace or a fluidized bed;
the deposition chamber is connected to the second furnace chamber via a first gas inlet, and parameters of an automatic gas inlet valve of the first gas inlet is adjustable, so as to control a deposition amount of the gaseous lithium;
an exterior of the deposition chamber is provided with a second gas inlet, and a deposition amount of the silicon-containing gas is controlled by adjusting parameters of an automatic gas inlet valve of the second gas inlet;
a temperature for evaporating lithium into the gaseous form is 800-1500°C, and the temperature is kept for 1-20 hours; and
the carrier gas is argon, with a flow rate of 1-50 L/min.

Preferably, the silicon-containing gas comprises one or more silane gases from monosilane , disilane, propylsilane, dichlorosilane, trichlorosilane and tetrachlorosilane.

Preferably, a deposition temperature for the silicon-containing gas is 600-1500°C, a vapor deposition duration is 1-20 hours, and a flow rate of the gas is 0.5-50 L/min.

Preferably, performing carbon coating on the precursor material using the gas-phase method comprises: depositing a carbon source gas at a temperature of 450-1000°C onto the outer surface of the porous carbon microspheres, where the metal lithium particles and the nanosilicon particles are evenly deposited in the through holes, to form a carbon shell; and
the carbon source gas comprises one or more of the following: methane, ethane, propane, butane, acetylene, and propylene, a flow rate of the carbon source gas is 1-50 L/min, and a deposition duration is 1-15 hours.

Preferably, in S1 and S2, a thermal plasma method is employed using industrial silicon powder and metal lithium as raw materials, and in a thermal plasma processing device, gaseous lithium and silicon vapor are deposited into the through holes of the porous carbon microspheres, to obtain the precursor material.

In a third aspect, an embodiment of the present invention provides a negative plate which comprises the high-initial efficiency negative electrode material as described in the first aspect.

In a fourth aspect, an embodiment of the present invention provides a lithium-ion secondary battery, and the lithium battery comprises the negative plate as described in the third aspect.

Embodiments of the present invention provide a high-initial efficiency negative electrode material for lithium-ion secondary batteries and a preparation method thereof. By depositing gaseous lithium and a silicon-containing gas alternately in through holes of porous carbon microspheres, metal lithium particles and nanosilicon particles are formed. On one hand, the resulting nanoscale silicon particles, with a grain size of less than 45 nm, effectively reduce the volume expansion effect. At the same time, the alternating deposition of nanosilicon and metal lithium allows for uniform distribution in the porous carbon microspheres, preventing the agglomeration of nanosilicon. On the other hand, the alternating co-deposition of metal lithium and silicon in the porous carbon microspheres can avoid the formation of lithium dendrites due to uneven distribution, while maximizing the lithium supplementation effect, thereby improving the initial Coulombic efficiency of the negative electrode material.

A lithium supplementation method for the negative electrode material provided in the embodiment of the present invention is simple and easy to operate, allowing for application in largescale production. This facilitates the uniform distribution of metal lithium particles in the nanosilicon particles, thereby avoiding the formation of lithium dendrites.

### BRIEF DESCRIPTION OF THE SEVERAL VIEWS OF THE DRAWINGS

The technical solutions of the embodiments of the present invention will be described in further detail with reference to the drawings and embodiments.
Fig. 1 is a flowchart of a preparation method of a high-initial efficiency negative electrode material using chemical vapor deposition according to an embodiment of the present invention.
Fig. 2 is a structural diagram of a cross section of a high-initial efficiency negative electrode material according to an embodiment of the present invention.
Fig. 3 presents a charge-discharge curve of a battery assembled with a high-initial efficiency negative electrode material, prepared according to Embodiment 1 of the present invention.

### DETAILED DESCRIPTION OF THE INVENTION

The present invention will be further explained below by referring to drawings and specific embodiments, but it should be understood that these embodiments are only for more detailed explanation, and should not be construed as limiting the present invention in any way, that is, not intended to limit the scope of protection of the present invention.

An embodiment of the present invention provides a high-initial efficiency negative electrode material for lithium-ion secondary batteries, comprising a porous carbon matrix, metal lithium particles, nanosilicon particles, and a carbon shell; a particle size of the high-initial efficiency negative electrode material is 1-100 µm; and the use of the high-initial efficiency negative electrode material in lithium-ion secondary batteries results in an initial-cycle Coulombic efficiency of 99%-105%.

Here, the porous carbon matrix is porous carbon microspheres with through holes, and an average hole size of the through holes is 1-50 nm;
the metal lithium particles are formed by the deposition of gaseous lithium in the through holes, and a particle size of the metal lithium particles is 0.1-45 nm; and the nanosilicon particles are formed by the deposition of a silicon-containing gas in the through holes, and a particle size of the nanosilicon particles is 0.1-45 nm.

A mass of the metal lithium particles accounts for 10%-50% of a total mass of the high-initial efficiency negative electrode material, preferably 20%-40%; a mass of the nanosilicon particles accounts for 20%-70% of the total mass of the high-initial efficiency negative electrode material, preferably 40%-65%; and a mass of the carbon shell accounts for 1%-20% of the total mass of the high-initial efficiency negative electrode material, preferably 15%-20%.

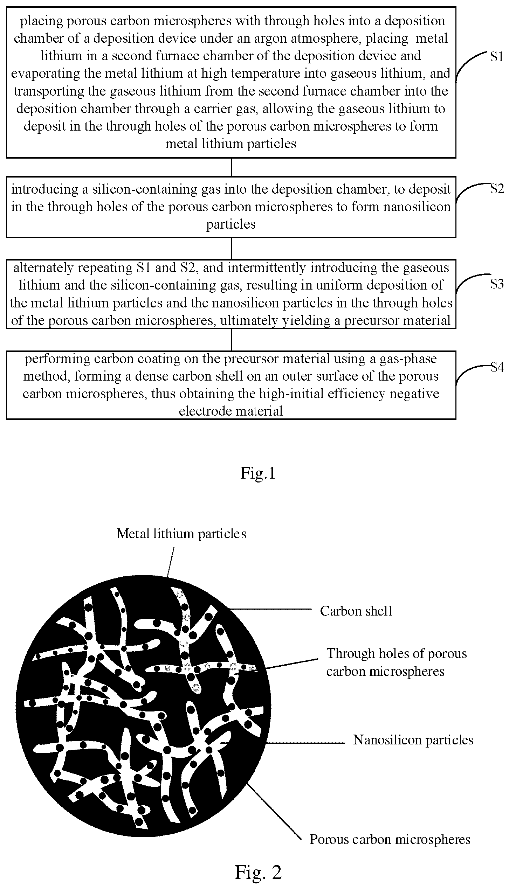

An embodiment of the present invention provides a preparation method of the high-initial efficiency negative electrode material, which is a vapor deposition method, as shown in Fig. 1, comprising:
Step S1, placing porous carbon microspheres with through holes into a deposition chamber of a deposition device under an argon atmosphere, placing metal lithium in a second furnace chamber of the deposition device and evaporating the metal lithium at high temperature into gaseous lithium, and transporting the gaseous lithium from the second furnace chamber into the deposition chamber through a carrier gas, allowing the gaseous lithium to deposit in hole structure of the through holes of the porous carbon microspheres to form metal lithium particles;
   where the deposition device comprises any one of a vapor deposition furnace, a tube furnace, a rotary furnace, a bell jar furnace or a fluidized bed;
   the deposition chamber is connected to the second furnace chamber via a first gas inlet, and parameters of an automatic gas inlet valve of the first gas inlet is adjustable, so as to control a deposition amount of the gaseous lithium;
   an exterior of the deposition chamber is provided with a second gas inlet, and by adjusting parameters of an automatic gas inlet valve of the second gas inlet, a deposition amount of the silicon-containing gas is controlled;
   a temperature for evaporating lithium into the gaseous form is 800-1500°C, and the temperature is kept for 1-20 hours; and
   the carrier gas is argon, with a flow rate of 1-50 L/min;
Step S2, introducing a silicon-containing gas into the deposition chamber, to deposit in the through holes of the porous carbon microspheres to form nanosilicon particles;
   where the silicon-containing gas comprises one or more silane gases from monosilane, disilane, propylsilane, dichlorosilane, trichlorosilane and tetrachlorosilane; and
   a deposition temperature for the silicon-containing gas is 600-1200°C, a vapor deposition duration is 1-20 hours, and a flow rate of the gas is 0.5-50 L/min;
Step S3, alternately repeating S1 and S2, and intermittently introducing the gaseous lithium and the silicon-containing gas, resulting in uniform deposition of the metal lithium particles and the nanosilicon particles in the through holes of the porous carbon microspheres, ultimately yielding a precursor material;
   where as in the range of deposition time, the time interval for introducing the gaseous lithium and the silicon-containing gas alternately is 0.5-1 hour;
Step S4, performing carbon coating on the precursor material using a gas-phase method, forming a dense carbon shell on an outer surface of the porous carbon microspheres, thus obtaining the high-initial efficiency negative electrode material;
   where performing carbon coating on the precursor material using the gas-phase method comprises: depositing a carbon source gas at a temperature of 450-1000°C onto the outer surface of the porous carbon microspheres, where the metal lithium particles and the nanosilicon particles are evenly deposited in the through holes,to form a carbon shell; and the carbon source gas comprises one or more of the following: methane, ethane, propane, butane, acetylene, and propylene, a flow rate of the carbon source gas is 1-50 L/min, and time duration for deposition is 1-15 hours.

In this application, for Step S2, the deposition temperature for the silicon-containing gas is 600-1500°C, preferably 600-1200°C, such as 600°C, 700°C, 800°C, 900°C, 1000°C, 1100°C, and 1200°C, or any temperature in this range. If the temperature is below 600°C, the silicon-containing gas material does not undergo sufficient pyrolysis. Conversely, if the temperature exceeds 1200°C, the pyrolytic reduction of the silicon-containing gas leads to severe crystallization of the resulting nanosilicon, resulting in larger silicon grain sizes that affect the cycling performance. Additionally, at high temperatures, the reaction between silicon and carbon produces silicon carbide, which impacts the conductivity of the material.

In this application, in step S3 of the preparation method, S1 and S2 may be alternately repeated in any order. S2 may precede S1, as long as the metal lithium particles and the nanosilicon particles are uniformly and alternately deposited in the through holes of the porous carbon microspheres. This can enhance the initiali-cycle Coulombic efficiency while preventing the formation of lithium dendrites.

In an alternative scheme, in S1 and S2 of the preparation method, a thermal plasma method may be employed using industrial silicon powder and metal lithium as raw materials, and in a thermal plasma processing device, gaseous lithium and silicon vapor are deposited into the pores of the through holes of the porous carbon microspheres, resulting in the formation of the precursor material.

The structural diagram of the high-initial efficiency negative electrode material for lithium-ion secondary batteries obtained by the above preparation method is shown in Fig. 2. As shown in Fig. 2, metal lithium particles and nanosilicon particles are alternately deposited in the through holes of the porous carbon microspheres.

The high-initial efficiency negative electrode material provided by the embodiment of the present invention can be used as an active substance for negative electrode materials in lithium batteries, and is applied in producing negative plates for lithium-ion secondary batteries. The negative plate in this application also comprises an negative electrode current collector, which is not specifically limited in this application as long as the objectives of this application can be realized. For example, it may be, but not limited to, copper foil, copper alloy foil, nickel foil, stainless steel foil, nickel foam, copper foam, or composite current collector.

Lithium-ion secondary batteries that employ the high-initial efficiency negative electrode material provided by the embodiment of the present invention as the negative electrode active material exhibit a higher initial-cycle Coulombic efficiency.

In order to better understand the technical scheme provided by the present invention, the specific process of preparing the high-initial efficiency negative electrode material for lithiumion secondary batteries, and the method and characteristics of its application in a lithium battery are described below with several embodiments.

### Embodiment 1

This embodiment provides a preparation process and performance test for a high-initial efficiency negative electrode material for lithium-ion secondary batteries. The preparation process comprises the following steps:
Step S1, placing porous carbon microspheres with through holes into a deposition chamber of a deposition device under an argon atmosphere, placing metal lithium in a second furnace chamber of the deposition device and evaporating the metal lithium at 800°C into gaseous lithium, and transporting the gaseous lithium from the second furnace chamber into the deposition chamber through an argon carrier gas at a flow rate of 0.5 L/min, allowing the gaseous lithium to deposit in the through holes of the porous carbon microspheres to form metal lithium particles, with a deposition duration of 20 hours;
Step S2, introducing silane at a flow rate of 0.5 L/min into the deposition chamber maintained at a temperature of 600°C, to deposit in the through holes of the porous carbon microspheres to form nanosilicon particles, with a deposition duration of 20 hours;
Step S3, alternately repeating S1 and S2, and introducing the gaseous lithium and the silicon-containing gas alternately with a 0.5-hour interval, resulting in uniform deposition of the metal lithium particles and the nanosilicon particles in the through holes of the porous carbon microspheres, for obtaining a precursor material; and
Step S4, performing carbon coating on the precursor material using a gas-phase method, methane at a flow rate of 1 L/min being used and deposition lasting 15 hours at 450°C, forming a dense carbon shell on an outer surface of the porous carbon microspheres, thus obtaining the high-initial efficiency negative electrode material.

The high-initial efficiency negative electrode material prepared by this embodiment was used to prepare negative plates, and batteries were assembled and tested. Details are as follows.

Preparation of negative plates: The obtained high-initial efficiency negative electrode material, carbon black serving as a conductive additive, and a binder (sodium carboxymethyl cellulose and butadiene styrene rubber in a 1:1 ratio) were weighed according to the mass ratio of 95:2:3, and slurry was prepared in a beater at room temperature. The prepared slurry was evenly applied to copper foil. After being dried in a blast drying oven at 50°C for 2 hours, the material was cut into 8×8 mm plates, and then vacuum drying was performed in a vacuum drying oven at 100°C for 10 hours. The dried plates were immediately transferred into a glove box for battery assembly.

Battery assembly: Simulated battery assembly was performed in a glove box containing high purity Ar atmosphere, with lithium metal serving as a counter electrode, and a solution of ethylene carbonate (EC)/dimethyl carbonate (DMC) (v:v=1:1) containing 1 mol/L LiPF₆ as an electrolyte.

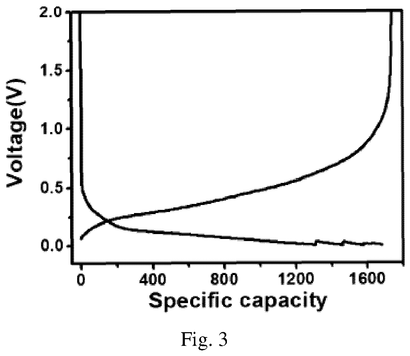

Testing: A constant current charge-discharge mode test was carried out by using a charge-discharge instrument. The discharge cut-off voltage was 0.005 V and the charge cut-off voltage was 1.5 V. The charge-discharge test was carried out at C/10 current density. The charge-discharge curve is shown in Fig. 3. The test data are recorded in Table 1.

### Embodiment 2

This embodiment provides a preparation process and performance test for a high-initial efficiency negative electrode material for lithium-ion secondary batteries. It comprises the following steps:
Step S1, placing porous carbon microspheres with through holes into a deposition chamber of a deposition device under an argon atmosphere, placing metal lithium in a second furnace chamber of the deposition device and evaporating the metal lithium at 900°C into gaseous lithium, and transporting the gaseous lithium from the second furnace chamber into the deposition chamber through an argon carrier gas at a flow rate of 5 L/min, allowing the gaseous lithium to deposit in pores of the through holes of the porous carbon microspheres to form metal lithium particles, with a deposition duration of 18 hours;
Step S2, introducing a propylsilane gas at a flow rate of 5 L/min into the deposition chamber maintained at a temperature of 650°C, to deposit in the through holes of the porous carbon microspheres to form nanosilicon particles, with a deposition duration of 18 hours;
Step S3, alternately repeating S1 and S2, and introducing the gaseous lithium and the silicon-containing gas alternately with a 1-hour interval, resulting in uniform deposition of the metal lithium particles and the nanosilicon particles in the through holes of the porous carbon microspheres, to obtain a precursor material; and
Step S4, performing carbon coating on the precursor material using a gas-phase method, ethane at a flow rate of 5 L/min being used and deposition lasting 14 hours at 500°C, forming a dense carbon shell on an outer surface of the porous carbon microspheres, thus obtaining the high-initial efficiency negative electrode material.

The high-initial efficiency negative electrode material prepared by this embodiment was used to prepare negative plates, and batteries were assembled for testing. The specific processes are the same as in Embodiment 1, and the test results are detailed in Table 1.

### Embodiment 3

This embodiment provides a preparation process and performance test for a high-initial efficiency negative electrode material for lithium-ion secondary batteries. It comprises the following steps:
Step S1, placing porous carbon microspheres with through holes into a deposition chamber of a deposition device under an argon atmosphere, placing metal lithium in a second furnace chamber of the deposition device and evaporating the metal lithium at 1000°C into gaseous lithium, and transporting the gaseous lithium from the second furnace chamber into the deposition chamber through an argon carrier gas at a flow rate of 10 L/min, allowing the gaseous lithium to deposit in the through holes of the porous carbon microspheres to form metal lithium particles, with a deposition duration of 16 hours;
Step S2, introducing dichlorosilane at a flow rate of 10 L/min into the deposition chamber maintained at a temperature of 700°C, to deposit in the through holes of the porous carbon microspheres to form nanosilicon particles, with a deposition duration of 16 hours;
Step S3, alternately repeating S1 and S2, and introducing the gaseous lithium and the silicon-containing gas alternately with a 0.5-hour interval, resulting in uniform deposition of the metal lithium particles and the nanosilicon particles in the through holes of the porous carbon microspheres,t to obtain a precursor material; and
Step S4, performing carbon coating on the precursor material using a gas-phase method, using propane at a flow rate of 10 L/min and deposition lasting 12 h at 550°C, forming a dense carbon shell on an outer surface of the porous carbon microspheres, thus obtaining the high-initial efficiency negative electrode material.

The high-initial efficiency negative electrode material prepared by this embodiment was used to prepare negative plates, and batteries were assembled for testing. The specific processes are the same as in Embodiment 1, and the test results are detailed in Table 1.

### Embodiment 4

This embodiment provides a preparation process and performance test for a high-initial efficiency negative electrode material for lithium-ion secondary batteries. It comprises the following steps:
S1, placing porous carbon microspheres with through holes into a deposition chamber of a deposition device under an argon atmosphere, placing evaporating metal lithium in a second furnace chamber of the deposition device and evaporating the metal lithium at 1100°C into gaseous lithium, and transporting the gaseous lithium from the second furnace chamber into the deposition chamber through an argon carrier gas at a flow rate of 15 L/min, allowing the gaseous lithium to deposit in the through holes of the porous carbon microspheres to form metal lithium particles, with a deposition duration of 14 hours;
S2, introducing a trichlorosilane gas at a flow rate of 15 L/min into the deposition chamber maintained at a temperature of 750°C, to deposit in the through holes of the porous carbon microspheres to form nanosilicon particles, with a deposition duration of 14 hours;
S3, alternately repeating S1 and S2, and introducing the gaseous lithium and the silicon-containing gas alternately with a 1-hour interval, resulting in uniform deposition of the metal lithium particles and the nanosilicon particles in the through holes of the porous carbon microspheres, to obtain a precursor material; and
S4, performing carbon coating on the precursor material using a gas-phase method, using butane at a flow rate of 15 L/min and deposition lasting 10 hours at 600°C, forming a dense carbon shell on an outer surface of the porous carbon microspheres, thus obtaining the high-initial efficiency negative electrode material.

The high-initial efficiency negative electrode material prepared by this embodiment was used to prepare negative plates, and batteries were assembled for testing. The processes are the same as in Embodiment 1, and the test results are detailed in Table 1.

### Embodiment 5

This embodiment provides a preparation process and performance test for a high-initial efficiency negative electrode material for lithium-ion secondary batteries. It comprises the following steps:
Step S1, placing porous carbon microspheres with through holes into a deposition chamber of a deposition device under an argon atmosphere, placing metal lithium in a second furnace chamber of the deposition device and evaporating the metal lithium at 1200°C into gaseous lithium, and transporting the gaseous lithium from the second furnace chamber into the deposition chamber through an argon carrier gas at a flow rate of 20 L/min, allowing the gaseous lithium to deposit in the through holes of the porous carbon microspheres to form metal lithium particles, with a deposition duration of 12 hours;
Step S2, introducing silane at a flow rate of 20 L/min into the deposition chamber maintained at a temperature of 800°C, to deposit inthe through holes of the porous carbon microspheres to form nanosilicon particles, with a deposition duration of 12 hours;
Step S3, alternately repeating S1 and S2, and introducing the gaseous lithium and the silicon-containing gas alternately with a 1-hour interval, resulting in uniform deposition of the metal lithium particles and the nanosilicon particles in the through holes of the porous carbon microspheres, to obtain a precursor material; and
Step S4, performing carbon coating on the precursor material using a gas-phase method, acetylene at a flow rate of 20 L/min being used and deposition lasting 15 hours at 650°C, forming a dense carbon shell on an outer surface of the porous carbon microspheres, thus obtaining the high-initial efficiency negative electrode material.

The high-initial efficiency negative electrode material prepared by this embodiment was used to prepare negative plates, and batteries were assembled for testing. The specific processes are the same as in Embodiment 1, and the test results are detailed in Table 1.

### Embodiment 6

This embodiment provides a preparation process and performance test for a high-initial efficiency negative electrode material for lithium-ion secondary batteries. It comprises the following steps:
Step S1, placing porous carbon microspheres with through holes into a deposition chamber of a deposition device under an argon atmosphere, placing metal lithium in a second furnace chamber of the deposition device and evaporating the metal lithium at 1300°C into gaseous lithium, and transporting the gaseous lithium from the second furnace chamber into the deposition chamber through an argon carrier gas at a flow rate of 25 L/min, allowing the gaseous lithium to deposit in the through holes of the porous carbon microspheres to form metal lithium particles, with a deposition duration of 10 hours;
Step S2, introducing silane at a flow rate of 25 L/min into the deposition chamber maintained at a temperature of 900°C, to deposit in the through holes of the porous carbon microspheres to form nanosilicon particles, with a deposition duration of 10 hours;
Step S3, alternately repeating S1 and S2, and introducing the gaseous lithium and the silicon-containing gas alternately with a 0.5-hour interval, resulting in uniform deposition of the metal lithium particles and the nanosilicon particles in the through holes of the porous carbon microspheres, to obtain a precursor material; and
Step S4, performing carbon coating on the precursor material using a gas-phase method, using propylene at a flow rate of 25 L/min and deposition lasting 6 hours at 700°C, forming a dense carbon shell on an outer surface of the porous carbon microspheres, thus obtaining the high-initial efficiency negative electrode material.

The high-initial efficiency negative electrode material prepared by this embodiment was used to prepare negative plates, and batteries were assembled for testing. The specific processes are the same as in Embodiment 1, and the test results are detailed in Table 1.

### Embodiment 7

This embodiment provides a preparation process and performance test for a high-initial efficiency negative electrode material for lithium-ion secondary batteries. It comprises the following steps:
S1, placing porous carbon microspheres with through holes into a deposition chamber of a deposition device under an argon atmosphere, placing metal lithium in a second furnace chamber of the deposition device and evaporating the metal lithium at 1400°C into gaseous lithium, and transporting the gaseous lithium from the second furnace chamber into the deposition chamber through an argon carrier gas at a flow rate of 30 L/min, allowing the gaseous lithium to deposit in the through holes of the porous carbon microspheres to form metal lithium particles, with a deposition duration of 5 hours;
S2, introducing silane at a flow rate of 30 L/min into the deposition chamber maintained at a temperature of 1000°C, to deposit in the through holes of the porous carbon microspheres to form nanosilicon particles, with a deposition duration of 5 hours;
S3, alternately repeating S1 and S2, and introducing the gaseous lithium and the silicon-containing gas alternately with a 1-hour interval, resulting in uniform deposition of the metal lithium particles and the nanosilicon particles in the through holes of the porous carbon microspheres, to obtain a precursor material; and
S4, performing carbon coating on the precursor material using a gas-phase method, using a mixed gas of methane and ethane at a flow rate of 15 L/min (volume ratio 1:1) and deposition lasting 4 hours at 800°C, forming a dense carbon shell on an outer surface of the porous carbon microspheres, thus obtaining the high-initial efficiency negative electrode material.

The high-initial efficiency negative electrode material prepared by this embodiment was used to prepare negative plates, and batteries were assembled for testing. The specific processes are the same as in Embodiment 1, and the test results are detailed in Table 1.

### Embodiment 8

This embodiment provides a preparation process and performance test for a high-initial efficiency negative electrode material for lithium-ion secondary batteries. It comprises the following steps:
S1, placing porous carbon microspheres with through holes into a deposition chamber of a deposition device under an argon atmosphere, placing metal lithium in a second furnace chamber of the deposition device and evaporating metal lithium at 1450°C into gaseous lithium, and transporting the gaseous lithium from the second furnace chamber into the deposition chamber through an argon carrier gas at a flow rate of 40 L/min, allowing the gaseous lithium to deposit in hole structure of the through holes of the porous carbon microspheres to form metal lithium particles, with a deposition duration of 3 hours;
S2, introducing silane at a flow rate of 40 L/min into the deposition chamber maintained at a temperature of 1100°C, to deposit in the through holes of the porous carbon microspheres to form nanosilicon particles, with a deposition duration of 3 hours;
S3, alternately repeating S1 and S2, and introducing the gaseous lithium and the silicon-containing gas alternately with a 1-hour interval, resulting in uniform deposition of the metal lithium particles and the nanosilicon particles in the through holes of the porous carbon microspheres, to obtain a precursor material; and
S4, performing carbon coating on the precursor material using a gas-phase method, using methane at a flow rate of 20 L/min and deposition lasting 2 hours at 900°C, forming a dense carbon shell on an outer surface of the porous carbon microspheres, thus obtaining the high-initial efficiency negative electrode material.

The high-initial efficiency negative electrode material prepared by this embodiment was used to prepare negative plates, and batteries were assembled for testing. The specific processes are the same as in Embodiment 1, and the test results are detailed in Table 1.

### Embodiment 9

This embodiment provides a preparation process and performance test for a high-initial efficiency negative electrode material for lithium-ion secondary batteries. It comprises the following steps:
S1, placing porous carbon microspheres with through holes into a deposition chamber of a deposition device under an argon atmosphere, placing metal lithium in a second furnace chamber of the deposition device and evaporating the metal lithium at 1500°C into gaseous lithium, and transporting the gaseous lithium from the second furnace chamber into the deposition chamber through an argon carrier gas at a flow rate of 50 L/min, allowing the gaseous lithium to deposit in the through holes of the porous carbon microspheres to form metal lithium particles, with a deposition duration of 1 hour;
S2, introducing silane at a flow rate of 50 L/min into the deposition chamber maintained at a temperature of 1200°C, to deposit in the through holes of the porous carbon microspheres to form nanosilicon particles, with a deposition duration of 1 hour;
S3, alternately repeating S1 and S2, and introducing the gaseous lithium and the silicon-containing gas alternately with a 0.5-hour interval, resulting in uniform deposition of the metal lithium particles and the nanosilicon particles in the through holes of the porous carbon microspheres, to obtain a precursor material; and
S4, performing carbon coating on the precursor material using a gas-phase method, using methane at a flow rate of 12.5 L/min and deposition lasting 1 hour at 1000°C, forming a dense carbon shell on an outer surface of the porous carbon microspheres, thus obtaining the high-initial efficiency negative electrode material.

The high-initial efficiency negative electrode material prepared by this embodiment was used to prepare negative plates, and batteries were assembled for testing. The specific processes are the same as in Embodiment 1, and the test results are detailed in Table 1.

### Embodiment 10

This embodiment provides a preparation process and performance test for a high-initial efficiency negative electrode material for lithium-ion secondary batteries. A thermal plasma method was used. The process is as follows.

400 g of industrial silicon powder was used as the silicon source, and 300 g of metal lithium slices served as the lithium source. The industrial silicon powder and the lithium slices were placed in a high-temperature zone of a plasma treatment device, while 1 kg of porous carbon microspheres with through holes were positioned in a condensation zone of the plasma treatment device. In an argon atmosphere, the plasma treatment device was used to vaporize and dissociate the industrial silicon powder and the metal lithium slices into a silicon-containing gas and gaseous lithium respectively. The silicon-containing gas and the gaseous lithium were alternately carried into the condensation zone 10 times by argon as the carrier gas, resulting in uniform deposition of metal lithium particles and nanosilicon particles in the through holes of the porous carbon microspheres to obtain a precursor material. Subsequently, methane, serving as the carbon source with a flow rate of 12 L/min, was introduced for deposition at 1000°C for 1 hour to carbon-coat the precursor material, yielding a high-initial efficiency negative electrode material.

The high-initial efficiency negative electrode material prepared by this embodiment was used to prepare negative plates, and batteries were assembled for testing. The specific processes are the same as in Embodiment 1, and the test results are detailed in Table 1.

In order to better illustrate the effect of the embodiments of the present invention, comparative examples are compared with the embodiments.

### Comparative example 1

This comparative example provides a preparation method and performance test for a traditional silicon-carbon composite material. The steps are as follows:
S1, placing 200 g of nanosilicon particles and 500 g of phenolic resin powder in a hydrothermal reactor for hydrothermal reaction, the conditions of hydrothermal reaction being that the pressure was 5 Mpa, the heating temperature was 300°C, and the temperature was kept for 8 hours, then discharging materials ,cleaning and filtering until a filtrate became transparent and colorless, and then drying to obtain a spherical precursor material; and
S2, placing the spherical precursor material into a reaction device for carbonization treatment, the conditions of carbonization treatment being that the temperature was raised to 900°C at 3°C/min, and the temperature was kept for 6 hours in a nitrogen atmosphere, so as to obtain a traditional silicon-carbon composite material.

The traditional silicon-carbon composite material prepared by this comparative example was used to prepare negative plates, and batteries were assembled for testing. The specific processes are the same as in Embodiment 1, and the test results are detailed in Table 1.

### Comparative example 2

This comparative example provides a preparation process and performance test for a silicon-carbon composite material. Unlike Embodiment 1, this comparative example only deposits nanosilicon particles in the through holes of the porous carbon microspheres and does not deposit metal lithium particles. The specific steps are as follows:
(1) under an argon atmosphere, introducing silicane into a deposition chamber of a vapor deposition furnace through an argon carrier gas at a flow rate of 0.5 L/min for vapor deposition at 800°C, with deposition lasting 20 hours, allowing the silicon-containing gas to deposit into pores of through holes of porous carbon microspheres to form nanosilicon particles, resulting in a precursor material; and
(2) performing gas phase coating on the precursor material to form a carbon shell, yielding the silicon-carbon composite material.

The silicon-carbon composite material prepared by this comparative example was used to prepare negative plates, and button cells were assembled for testing. The specific processes are the same as in Embodiment 1, and the test results are detailed in Table 1.

### Comparative example 3

This comparative example provides a preparation process and performance test for an negative electrode material. Unlike Embodiment 1, this comparative example alternately deposits nanosilicon particles and metal lithium particles in pores of porous carbon microspheres without through holes, followed by gas phase carbon coating to obtain the negative electrode material.

The negative electrode material prepared by this comparative example was used to prepare negative plates, and button cells were assembled for testing. The specific processes are the same as in Embodiment 1, and the test results are detailed in Table 1.

Table 1 presents the test results of the charging specific capacity and initial-cycle Coulombic efficiency for the batteries assembled in Embodiments 1-10 and Comparative examples 1-3.

| **No.** | **Charge specific capacity (mAh/g)** | **Initial-cycle efficiency (%)** |
|---|---|---|
| Embodiment 1 | 1739 | 103.43 |
| Embodiment 2 | 1725 | 102.42 |
| Embodiment 3 | 1720 | 100.44 |
| Embodiment 4 | 1725 | 99.85 |
| Embodiment 5 | 1729 | 102.87 |
| Embodiment 6 | 1737 | 100.17 |
| Embodiment 7 | 1738 | 101.26 |
| Embodiment 8 | 1751 | 103.74 |
| Embodiment 9 | 1746 | 102.86 |
| Embodiment 10 | 1740 | 102.1 |
| Comparative example 1 | 1212 | 78.92 |
| Comparative example 2 | 1898 | 92.34 |
| Comparative example 3 | 1356 | 99.81 |

Comparing the test data in Table 1, it can be seen that the batteries assembled with the high-initial efficiency negative electrode materials provided by Embodiments 1-10 of the present invention have an ultra-high initial-cycle efficiency compared to Comparative examples 1-2, and a higher charging specific capacity compared to Comparative examples 1 and 3. This is because according to the high-initial efficiency negative electrode materials prepared in Embodiments 1-10 of the present invention, by depositing gaseous lithium and a silicon-containing gas alternately in through holes of porous carbon microspheres, metal lithium particles and nanosilicon particles are formed. On one hand, the resulting nanoscale silicon particles, with a grain size of less than 45 nm, effectively reduce the volume expansion effect. At the same time, the alternating deposition of nanosilicon and metal lithium allows for uniform distribution in the porous carbon microspheres, preventing the agglomeration of nanosilicon. On the other hand, the alternating co-deposition of metal lithium and silicon in the porous carbon microspheres can avoid the formation of lithium dendrites due to uneven distribution, while maximizing the lithium supplementation effect, thereby improving the initial Coulombic efficiency of the negative electrode material.

The above-mentioned specific embodiments further explain the purpose, technical solution and beneficial effects of the present invention in detail. It should be understood that the above are only specific embodiments of the present invention and are not used to limit the scope of protection of the present invention. Any modification, equivalent substitution, improvement, etc. made in the spirit and principles of the present invention should be included in the scope of protection of the present invention.

## Claims

1. A high-initial efficiency negative electrode material for lithium-ion secondary batteries, comprising a porous carbon matrix, metal lithium particles, nanosilicon particles, and a carbon shell;
wherein the porous carbon matrix is porous carbon microspheres with through holes, and an average hole size of the through holes is 1-50 nm;
the metal lithium particles are formed by depositing gaseous lithium in the through holes, and the nanosilicon particles are formed by depositing a silicon-containing gas in the through holes;
a mass of the metal lithium particles accounts for 10%-50% of a total mass of the high-initial efficiency negative electrode material;
a particle size of the nanosilicon particles is between 0.1and 45 nm, and a mass of the nanosilicon particles accounts for 20%-70% of the total mass of the high-initial efficiency negative electrode material; and
the application of the high-initial efficiency negative electrode material in lithium-ion secondary batteries results in a initial-cycle Coulombic efficiency of 99%-105%.

2. The high-initial efficiency negative electrode material for lithium-ion secondary batteries according to claim 1, wherein a mass of the carbon shell accounts for 1%-20% of the total mass of the high-initial efficiency negative electrode material; and
a particle size of the high-initial efficiency negative electrode material is 1µm-100 µm.

3. A preparation method of the high-initial efficiency negative electrode material for lithium-ion secondary batteries according to any one of claims 1-2, which is a vapor deposition method, comprising:
S1, placing porous carbon microspheres with through holes into a deposition chamber of a deposition device under an argon atmosphere, placing metal lithium in a second furnace chamber of the deposition device and evaporating the metal lithium at high temperature into gaseous lithium, and transporting the gaseous lithium from the second furnace chamber into the deposition chamber through a carrier gas, allowing the gaseous lithium to deposit in the through holes of the porous carbon microspheres to form metal lithium particles;
S2, introducing a silicon-containing gas into the deposition chamber, to deposit in the through holes of the porous carbon microspheres to form nanosilicon particles;
S3, alternately repeating S1 and S2, and intermittently introducing the gaseous lithium and the silicon-containing gas, resulting in uniform deposition of the metal lithium particles and the nanosilicon particles in the through holes of the porous carbon microspheres, to obtaint a precursor material; and
S4, performing carbon coating on the precursor material using a gas-phase method, forming a dense carbon shell on an outer surface of the porous carbon microspheres, thus obtaining the high-initial efficiency negative electrode material.

4. The preparation method according to claim 3, wherein the deposition device comprises any one of a vapor deposition furnace, a tube furnace, a rotary furnace, a bell jar furnace or a fluidized bed;
the deposition chamber is connected to the second furnace chamber via a first gas inlet, and parameters of an automatic gas inlet valve of the first gas inlet is adjustable, so as to control a deposition amount of the gaseous lithium;
an exterior of the deposition chamber is provided with a second gas inlet, anda deposition amount of the silicon-containing gas is controlled by adjusting parameters of an automatic gas inlet valve of the second gas inlet ;
a temperature for evaporating lithium into the gaseous form is 800-1500°C, and the temperature is maintained for 1-20 hours; and
the carrier gas is argon, with a flow rate of 1L/min-50 L/min.

5. The preparation method according to claim 3, wherein the silicon-containing gas comprises one or more silane gases from monosilane, disilane, propylsilane, dichlorosilane, trichlorosilane and tetrachlorosilane.

6. The preparation method according to claim 3, wherein a deposition temperature for the silicon-containing gas is 600-1500°C, a vapor deposition duration is 1-20 hours, and a flow rate of the gas is 0.5L/min-50 L/min.

7. The preparation method according to claim 3, wherein performing carbon coating on the precursor material using the gas-phase method comprises: depositing a carbon source gas at a temperature of 450-1000°C onto the outer surface of the porous carbon microspheres, where the metal lithium particles and the nanosilicon particles are evenly deposited in the through holes, to form a carbon shell; and
the carbon source gas comprises one or more of the following: methane, ethane, propane, butane, acetylene, and propylene, a flow rate of the carbon source gas is 1L/min-50 L/min, and a deposition duration is 1-15 hours.

8. The preparation method according to claim 3, wherein in S1 and S2, a thermal plasma method is employed using industrial silicon powder and metal lithium as raw materials, and in a thermal plasma processing device, gaseous lithium and silicon vapor are deposited into of the through holes of the porous carbon microspheres, to form the precursor material.

9. A negative plate, comprising the high-initial efficiency negative electrode material according to any one of claims 1-2.

10. A lithium-ion secondary battery, wherein the lithium battery comprises the negative plate according to claim 9.
